# EUROPEAN PATENT SPECIFICATION

(11) **EP 0 983 902 B1**
(45) Date of publication and mention of the grant of the patent: **06.08.2003**
(21) Application number: 99306945.9
(22) Date of filing: 01.09.1999
(51) Int. Cl.: B60R 7/02

(54) **Erectable and collapsible receptacle**
Zusammenklappbarer und auffaltbarer Behälter
Conteneur pliable et érigible

(30) Priority: 01.09.1998 GB 9819050
(43) Date of publication of application: 08.03.2000
(73) Proprietor: NISSAN EUROPEAN TECHNOLOGY CENTRE LIMITED, Sunderland, Tyne & Wear SR5 3NY (GB)
(72) Inventor: Groves, Stephan Anthony Robert, Kingsthorpe Village, Northampton NN2 6QL (GB)
(74) Representative: Godwin, Edgar James

(56) References cited:
- EP-A- 0 864 466
- DE-A- 4 243 678
- DE-A- 4 340 675
- DE-A- 4 432 369
- DE-A- 19 650 767
- GB-A- 779 715
- GB-A- 2 274 832

## Description

This invention relates to a receptacle for use in the luggage space of a vehicle such as an estate car or hatchback.

Objects which are carried loose in the luggage space of a vehicle can move about in the space during use of the vehicle. Furthermore, if the objects are dirty or wet they may contaminate the luggage space, which is usually provided with a soft trim which preferably should not become soiled. Objects may be carried in a container which can be secured in the luggage space, but such a container takes up valuable space when not in use. Containers which are erectable and collapsible are available, but they are not easy to manipulate.

The present invention relates to an erectable and collapsible receptacle which in the erected condition comprises a base, first and second mutually parallel major walls standing up from the base, and first and second mutually parallel minor walls standing up from the base, the minor walls extending between the major walls and being substantially orthogonal thereto, one edge portion of each wall being pivotably mounted so that in the collapsed condition of the receptacle the walls are substantially parallel to the base, the first major wall overlies the second major wall, and the first and second minor walls lie between the second major wall and the base as stated in the preamble of claim 1. Such a receptacle is known from GB-A-779 715.

In one aspect of the invention, the receptacle includes a deployment mechanism for moving the first major wall, the second major wall, and the minor walls successively in the stated order from the collapsed condition to the erected condition.

In another aspect of the invention, the receptacle includes a closing mechanism for moving the minor walls, the second major wall, and the first major wall successively in the stated order from the erected condition to the collapsed condition.

The deployment mechanism may comprise springs which urge the walls to the erected condition. Preferably, the walls are pivotably mounted by means of spring-loaded hinges.

The closing mechanism preferably comprises a transmission arranged to transmit rotation from a rotary drive source successively to the minor walls, the second major wall, and the first major wall.

The closing mechanism may be reversible in order to constitute a deployment mechanism.

An embodiment of the invention will be described further, by way of example only, with reference to the accompanying drawings, in which:
Figure 1 schematically shows a receptacle in the collapsed condition in the luggage space of a vehicle;
Figure 2 schematically shows a first stage in the erection of the receptacle;
Figure 3 schematically shows intermediate stages in the erection of the receptacle;
Figure 4 schematically shows the receptacle in the erected condition;
Figure 5 schematically shows an initial stage in the collapsing of the receptacle;
Figures 6 to 8 schematically show intermediate stages in the collapsing of the receptacle;
Figure 9 is a diagrammatic perspective view of the receptacle in the collapsed condition;
Figure 10 is a diagrammatic perspective view of the receptacle in the erected condition;
Figure 11 is a section on line XI-XI in Figure 9 (also indicated in Figure 12);
Figure 12 is a perspective view of minor walls and one major wall of the receptacle when viewed from below in the collapsed condition;
Figure 13 is a schematic plan view of parts of a mechanism for collapsing the receptacle;
Figure 14 is a schematic side view of parts of the mechanism;
Figures 15 show a perspective view of a detail of the mechanism; and
Figure 16 is a view in the direction of arrow XVI in Figure 15.

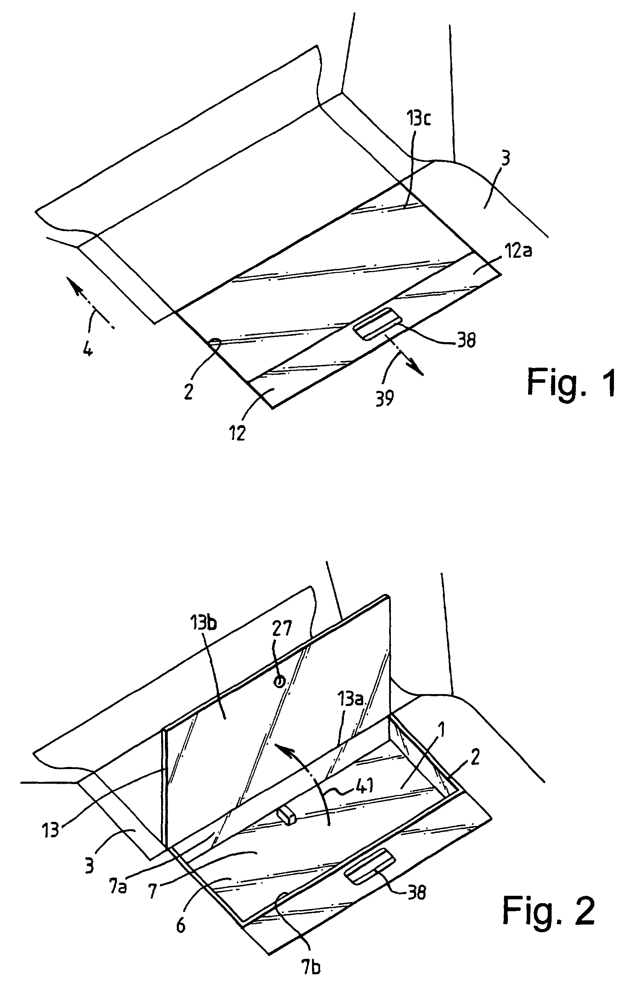

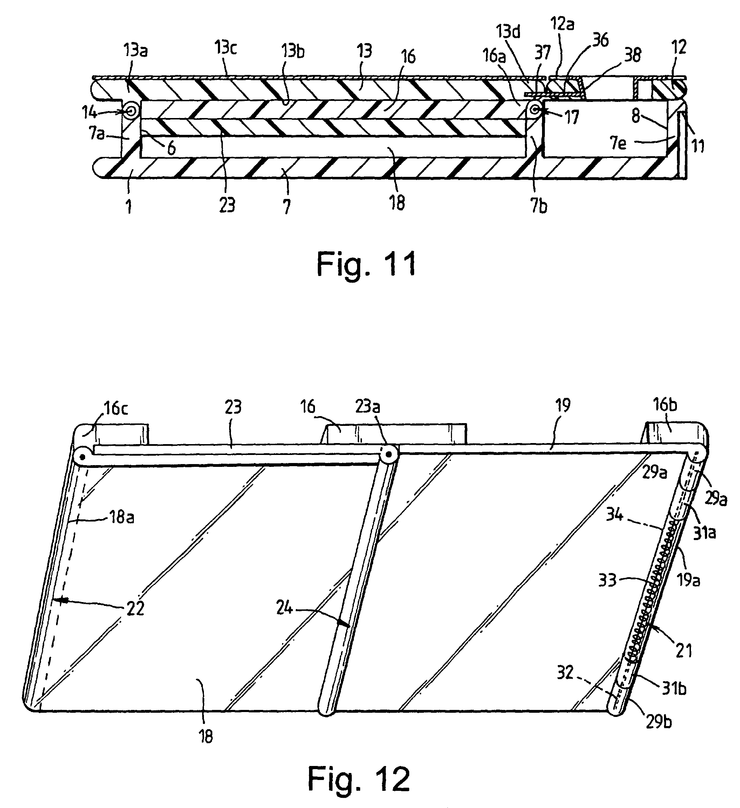

The erectable and collapsible receptacle illustrated comprises a base 1 in the form of a shallow open-topped box or tray which fits in a well 2 in the floor 3 of the luggage space in a vehicle. The well 2 is rectangular in plan, with two longer sides extending transversely of the vehicle and two shorter sides extending in the direction of travel (indicated by the arrow 4 in Figure 1). The bottom of the well 2 is formed by the metal underfloor of the vehicle body. The base 1 is made of plastics material and defines a water-tight or water-retaining region 6 (Figures 2 and 11) delimited by a bottom 7, front and rear sides 7a,7b, and left and right sides 7c,7d. The bottom 7 extends rearwardly beyond the rear side 7b to a rearmost sidewall 7e defining a transverse space 8 between it and the rear side 7b. All the surfaces of the base 1 are smooth or shallow grain non-absorbent wipe-clean surfaces.

The left and right sides 7c,7d of the base 1 have locating recesses for releasable engagement with complementary locating spring catches (not shown) provided on the short sides of the well 2. Alternatively, the recesses and spring catches could be reversed. The recesses 9 are at mid-height of the collapsed receptacle, so that they are engageable with the spring catches both in the normal position of the collapsed receptacle (shown in Figures 1, 9, and 11) and in the inverted position of the collapsed receptacle in which the wipe-clean outer surface of the bottom 7 of the base 1 is exposed in the luggage space. A handle formation 11 on the outside of the rearmost side wall 7e facilitates inversion of the collapsed receptacle. The upper side of the transverse space 8 is closed by a transverse cover 12 which is fixed to the base 1 and which is provided with a soft trim 12a matching the luggage floor 3, e.g. of woven or non-woven textile material.

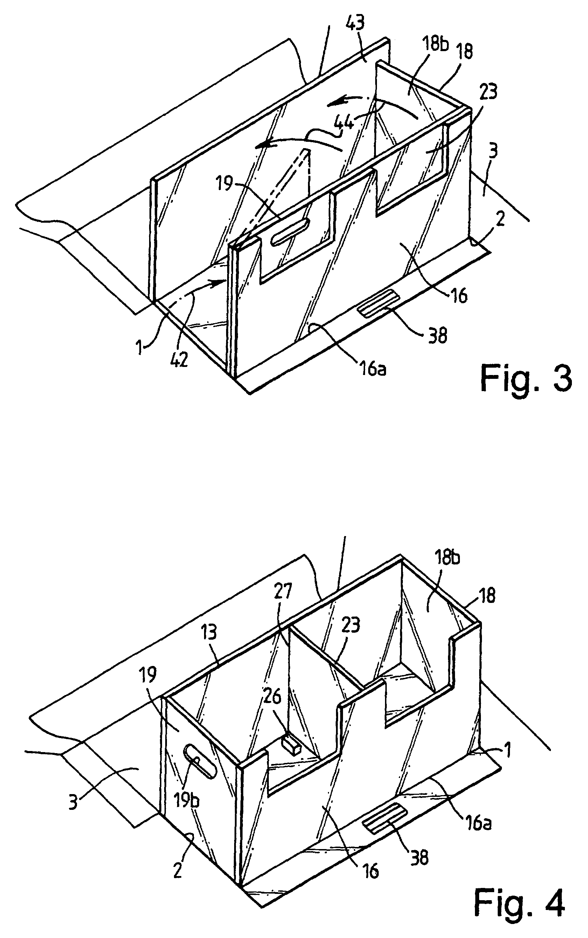

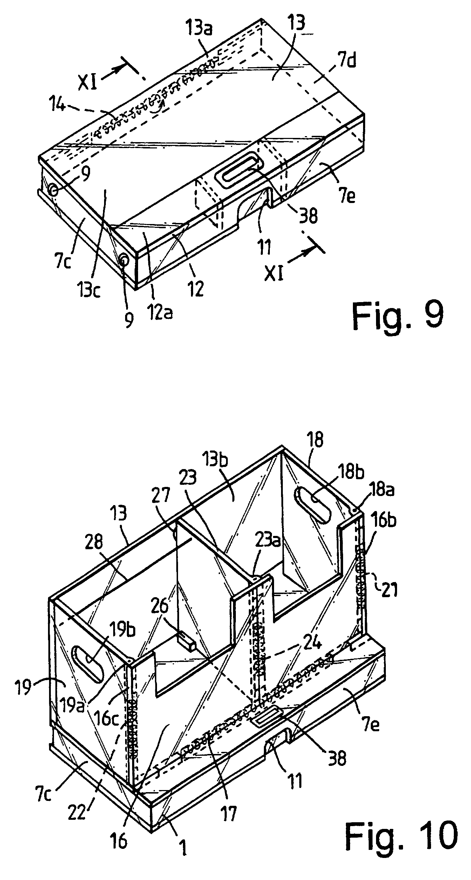

The receptacle is shown in the erected condition in Figures 4 and 10. It has a front wall 13 (first major wall) which stands up from the base 1 and which has a lower edge portion 13a (Figures 2, 9, and 11) pivotably mounted on the upper end of the front side 7a of the base 1 by means of a spring-loaded hinge 14. The front wall 13 has a smooth non-absorbent wipe-clean inner surface 13b, and its outer surface is covered by a soft trim 13c which matches the luggage floor 3.

A rear wall 16 (second major wall) has its lower edge portion 16a pivotably mounted on the upper end of the rear side 7b of the water-tight region 6 by means of a spring-loaded hinge 17.

A right-hand wall 18 (first minor wall) and a left-hand wall 19 (second minor wall) have their rear edge portions 18a,19a pivotably mounted on the right-hand and left-hand edge portions 16b,16c of the rear wall 16 by means of spring-loaded hinges 21,22 respectively. The walls 18,19 have respective slots 18b,19b serving as handles enabling the erected receptacle to be lifted out of the well 2.

An intermediate wall 23 extends parallel to the walls 18,19, mid-way between them, and has its rear edge portion 23a pivotably mounted on the middle of the inside surface of the rear wall 16 by means of a spring-loaded hinge 24. In the embodiment shown the left-hand side of the intermediate wall 23 rests against a stop 26 fixed on the bottom 7 of the base 1. A recess 27 in the inner surface of the front wall 13 receives a spring catch (not shown) in the front edge of the wall 23. The walls 19 and 23 are connected by a linking element 28 (such as a nylon cord) so that they move together.

The hinge 21 connecting the wall 19 to the wall 16 will now be described by way of example, with reference to Figure 12. The hinge 21 comprises two knuckles 29a,29b on the wall 19, two knuckles 31a,31b on the wall 16, and a pivot shaft 32 extending through the knuckles. A helically wound spring 33 is contained in a cover 34 fixed on the wall 19 and has end portions (not shown) which engage the respective walls 16 and 19 at positions which are reinforced to prevent the spring from cutting into the plastics material of the walls.

In the collapsed condition of the receptacle (shown in Figures 1, 9, and 11) the front wall 13 serves as a lid covering the water-tight region 6 of the base 1. This region contains the rear wall 16, overlying the walls 18,19, and 23 which are connected to it. In this condition, the lid or wall 13 is releasably locked to the transverse cover 12 by a sliding latch 36 (Figure 11) engaging in a recess 37 in the end portion 13d of the wall 13 remote from the pivotably mounted end portion 13a. The latch 36 can be released by grasping a spring-loaded handle 38 and pulling it rearwardly, as indicated by the arrow 39 in Figure 1. This single movement, which can be carried out with one hand, causes the receptacle to the deployed as follows. Firstly, the spring-loaded hinge 14 drives the front wall 13 from the collapsed condition to the erected condition as indicated in Figure 2 (in which the other walls have been omitted for the sake of clarity), as indicated by the arrow 41. This releases the rear wall 16, which is driven by the spring-loaded hinge 17 from the collapsed condition to the erected condition, as indicated by the arrow 42 in Figure 3. Thereupon, the right-hand wall 18 is driven by the spring loaded hinge 21 from the position in which it lies parallel to the wall 16 to the erected condition, as indicated by the arrow 43 in Figure 3. As soon as the wall 18 releases the intermediate wall 23, both the left-hand wall 19 and the intermediate wall 23 (linked by the flexible element 28) are driven to the erected condition, as indicated by the arrows 44 in Figure 3, by means of the spring loaded hinges 22 and 24.

If the walls 19 and 23 are not linked together, then the wall 19 moves to the erected condition at the same time as the wall 18, before the intermediate wall 23 moves away from the rear wall 16.

In the erected condition, the receptacle defines two open-topped compartments with wipe-clean internal surfaces, inside the tray or base 1 defining the water-tight or water-retaining region 6, in which water or other fluids dripping or spilling from the items loaded into the compartments can collect.

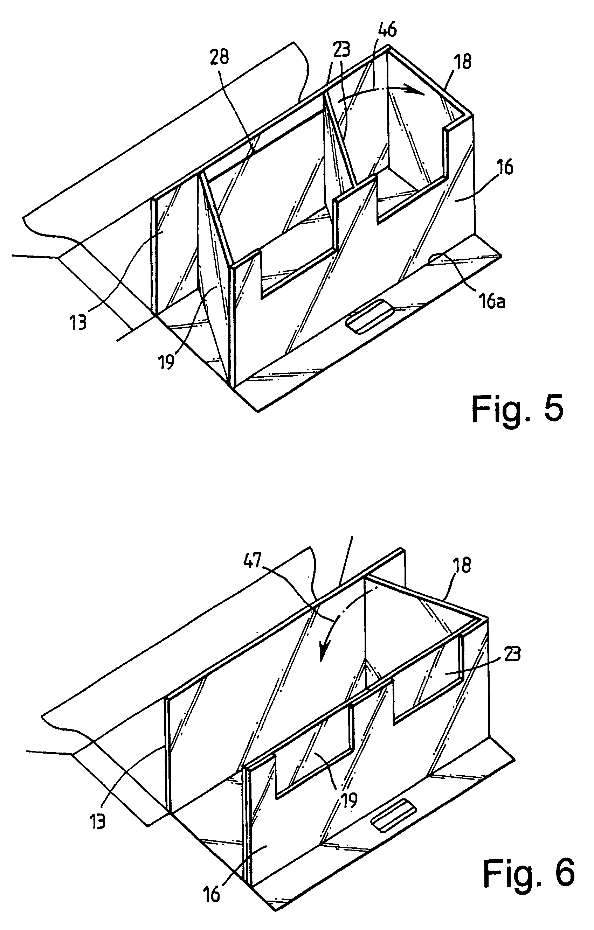

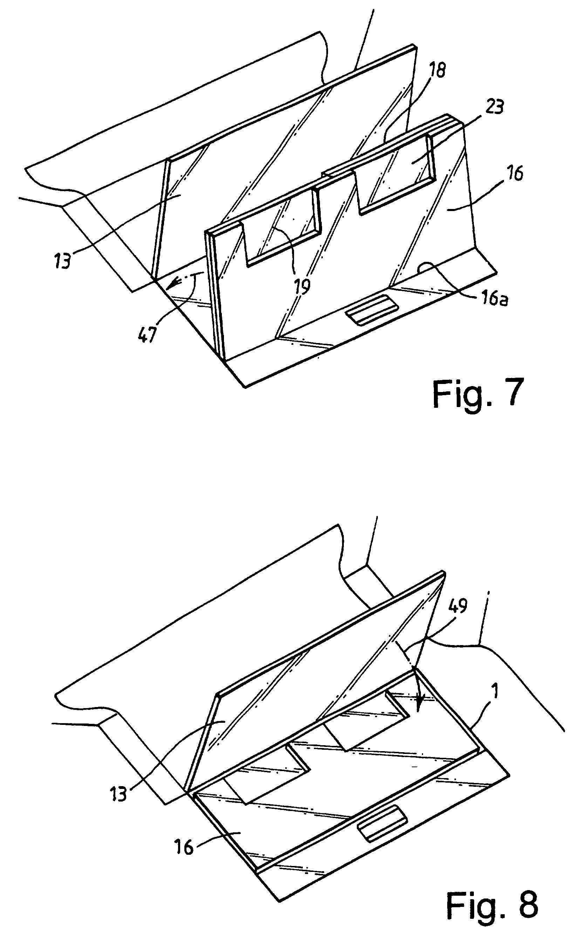

Figures 5 to 8 illustrate how the receptacle is collapsed by hand. Firstly, the intermediate wall 23 is folded back in the direction of the arrow 46 in Figure 5, until it is flat against the rear wall 16; the left-hand wall 19 folds back simultaneously, because of the linking element 28. The right-hand wall 18 is folded back in the direction of the arrow 47 in Figure 6 until it is flat against the intermediate wall 23. Holding the walls 18,19,23 against the rear wall 16, this wall 16 is then folded down as indicated by the arrow 48 in Figure 7 until all the walls 16,18,19,23 are contained within the base 1. While the wall 16 is held down with one hand, the other hand is used to fold down the front wall 13, as indicated by the arrow 49 in Figure 8, until the latch 36 engages in the recess 37 to hold the wall 13 down.

Various modifications may be made within the scope of the invention. For example, it is possible for one or more of the right-hand and left-hand walls or the intermediate wall to be pivoted to the base. The intermediate wall may be omitted, in which case the right-hand and left-hand walls may be substantially co-planar in the collapsed condition.

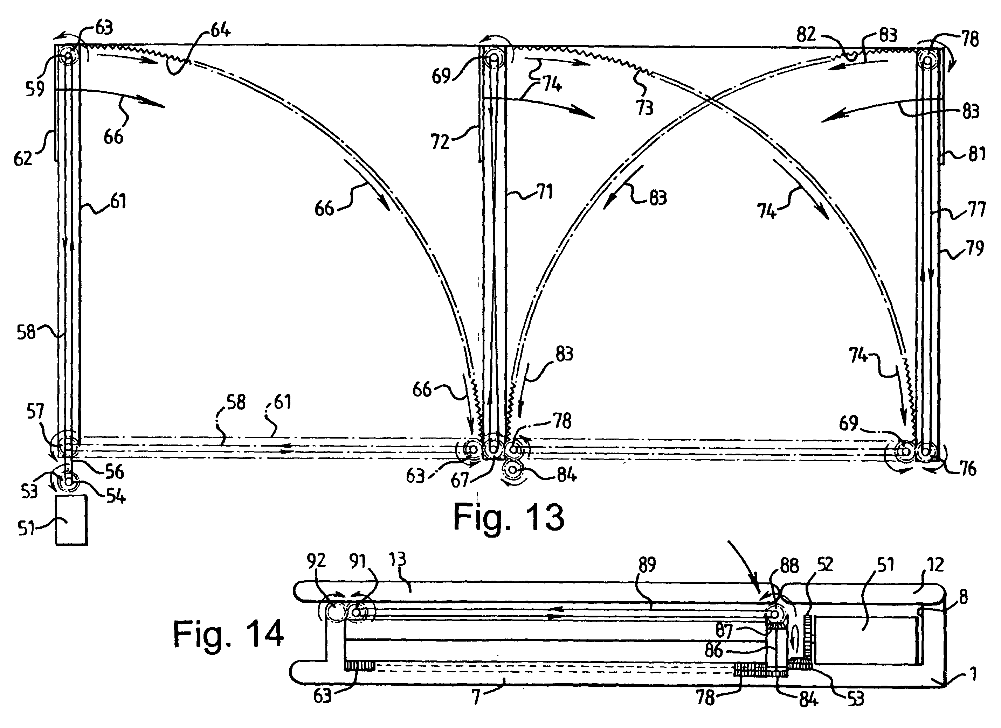

Figures 13 to 16 illustrate a motor-driven mechanism for closing the receptacle to the collapsed condition.

When this mechanism is provided, the flexible element 28 for connecting the walls 19 and 23 is omitted. The mechanism is mounted in the base 1 and is driven by a motor 51 accommodated in the transverse space 8. An output gear 52 of the motor 51 drives a bevel gear 53 combined with a pulley 54 connected by a belt 56 to a further pulley 57 connected by a further belt 58 to a pulley 59 which is mounted on the free end of a first arm 61 which is pivotable about the vertical axes of the pulley 57. The free end portion of the first arm 61 carries a vertical paddle 62 which acts on the left-hand wall 19. A first gear 63 turns with the pulley 59 and drives the left-hand wall 19 along a first toothed track 64 provided in the bottom 7 of the base 1, in the direction indicated by the arrows 66, until the wall 19 is parallel with the rear wall 16 and the gear 63 engages with a second gear 67 having a fixed axis. By way of a belt 68 the second gear 67 drives a third gear 69 mounted on the free end of a second arm 71 which is pivotable about the axis of the gear 67 and which carries a vertical paddle 72 acting on the intermediate wall 23. The rotating gear 69 engages with a second arcuate toothed track 73 and drives the intermediate wall 23 in the direction of the arrows 74 until the wall 23 is flat against the rear wall 16 and the third gear 69 meshes with a fourth gear 76 having a fixed vertical axis.

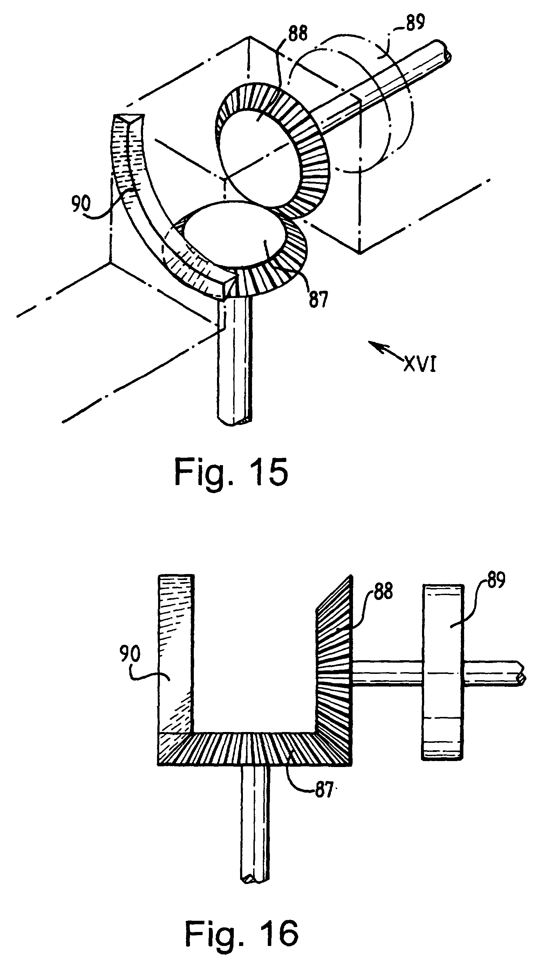

By way of a belt 77 the fourth gear 76 drives a fifth gear 78 mounted on the free end of a third arm 79 carrying a vertical paddle 81 acting on the right-hand wall 18. The rotating gear 78 travels along a third arcuate toothed track 82 in the direction indicated by the arrows 83 until the wall 18 is parallel to the rear wall 16 and the fifth gear 78 engages with a sixth gear 84 rigid with a vertical spindle 86 rotatably mounted in the base 1. The upper end of the spindle carries a bevel gear 87 engaged with a bevel gear 88 having a fixed horizontal axis coincident with the pivot axis of the rear wall 16. The bevel gear 87 is also in engagement with a fixed quadrant 90 (Figs. 15 and 16) located in a recess in the wall 16.

By means of a belt 89, the rotation of the gear 88 is transmitted to a gear 91 mounted in the upper end portion of the rear wall 16. Rotation of the bevel gear 87 causes the rear wall 16 to descend, through the engagement of the bevel gear 87 with the fixed quadrant 90 in the wall 16, until the gear 91 engages a fixed quadrant 92 co-axial with the pivot axis of the front wall 13. Whereupon the front wall 13 is pivoted down until the collapsed position shown in Figure 14 is reached. At this point, stalling of the motor 51 is detected and current supply to the motor is cut off automatically by conventional means.

It will be appreciated that, if the motor 51 is made reversible, the above-described mechanism can be used to deploy the receptacle from the collapsed condition to the erected position.

It will also be appreciated that the manual catch may be replaced by an electrically operated catch, e.g. solenoid operated. The spring assisted or motorised receptacle may then be linked to a vehicle remote locking system so that the receptacle can be erected by a user approaching the vehicle with items to be placed in the receptacle.

The motor drive of the mechanism could be replaced by a manual drive turned by hand. Alternatively, the drive may be pneumatic or hydraulic.

## Claims

1. An erectable and collapsible receptacle which in the erected condition comprises a base (1), first and second mutually parallel major walls (16,13) standing up from the base (1), and first and second mutually parallel minor walls (18,19) standing up from the base (1), the minor walls (18,19) extending between the major walls (13,16) and being substantially orthogonal thereto, one edge portion of each wall being pivotably mounted so that in the collapsed condition of the receptacle the walls (13,16,18,19) are substantially parallel to the base (1), the first major wall (13) overlies the second major wall (16), and the first and second minor walls (18,19) lie between the second major wall (16) and the base (1), **characterized in that** the receptacle includes a deployment mechanism for moving the first major wall (13), the second major wall (16), and the minor walls (18,19) successively in the stated order from the collapsed condition to the erected condition and/or a closing mechanism for moving the minor walls (18,19), the second major wall (16), and the first major wall (13) successively in the stated order from the erected condition to the collapsed condition.

2. A receptacle as claimed in claim 1, in which the base comprises an open-topped box (1), the interior of which is preferably non-absorbent, the box (1) preferably being water-tight.

3. A receptacle as claimed in claim 2, in which, in the collapsed condition, the second major wall (16) and the minor walls (18,19) are contained in the box (1), and the first major wall (13) constitutes a lid covering the top of the box (1).

4. A receptacle as claimed in claim 2 or 3, in which, in the erected condition, the minor walls (18,19) and the second major wall (16) rest against corresponding sides (7b-d) of the box (1).

5. A receptacle as claimed in any preceding claim, in which the deployment mechanism comprises springs acting on the walls (13,16,18,19).

6. A receptacle as claimed in any preceding claim, in which the walls (13,16,18,19) are pivotably mounted by means of spring-loaded hinges (14,17,21,22).

7. A receptacle as claimed in any preceding claim, in which the minor walls (18,19) are pivotably mounted on the second major wall (16).

8. A receptacle as claimed in any preceding claim, including an intermediate wall (23) which, in the erected condition, is mid-way between the minor walls (18,19) and is substantially orthogonal to the major walls (13,16) and which, in the collapsed condition, preferably lies between the first minor wall (18) and the second major wall (16) and is substantially co-planar with the second minor wall (19).

9. A receptacle as claimed in claim 8, in which the intermediate wall (23) is linked to the second minor wall (19).

10. A receptacle as claimed in any preceding claim, in which, in the collapsed condition, the first major wall (13) is connected to the base (1) by a releasable latch (36).

11. A receptacle as claimed in any preceding claim, in which the closing mechanism comprises a transmission arranged to transmit rotation from a rotary drive source, e.g. a motor (51), successively to the minor walls (18,19), the second major wall (16), and the first major wall (13).

12. A receptacle as claimed in any preceding claim, in which the closing mechanism is reversible and constitutes the deployment mechanism.

13. A vehicle including a receptacle fitted in a well (2) in the floor (3) of a luggage space of the vehicle, **characterised in that** the receptacle is an erectable and collapsible receptacle in accordance with any of claims 1 to 12.

## Patentansprüche

1. Aufstellbarer und zusammenklappbarer Behälter, der im aufgestellten Zustand eine Basis (1), eine erste und eine zweite zueinander parallele größere Wand (16, 13), die von der Basis (1) abstehen, und eine erste und eine zweite zueinander parallele kleinere Wand (18, 19) umfaßt, die von der Basis (1) abstehen, wobei die kleineren Wände (18, 19) zwischen den größeren Wänden (13, 16) verlaufen und wesentlich senkrecht zu denselben sind, wobei ein Kantenabschnitt jeder Wand schwenkbar angebracht wird, so daß die Wände (13, 16, 18, 19) im zusammengeklappten Zustand des Behälters wesentlich parallel zur Basis (1) sind, wobei die erste größere Wand (13) über der zweiten größeren Wand (16) liegt, und die erste und die zweite kleinere Wand (18, 19) zwischen der zweiten größeren Wand (16) und der Basis (1) liegen, **dadurch gekennzeichnet, daß** der Behälter einen Entfaltungsmechanismus, um die erste größere Wand (13), die zweite größere Wand (16) und die kleineren Wände (18, 19) nacheinander in der angegebenen Ordnung aus dem zusammengeklappten Zustand in den aufgestellten Zustand zu bewegen, und/oder einen Schließmechanismus einschließt, um die kleineren Wände (18, 19), die zweite größere Wand (16) und die erste größere Wand (13) nacheinander in der angegebenen Ordnung aus dem aufgestellten Zustand in den zusammengeklappten Zustand zu bewegen.

2. Behälter nach Anspruch 1, bei dem die Basis einen oben offenen Kasten (1) umfaßt, dessen Inneres vorzugsweise nichtabsorbierend ist, wobei der Kasten (1) vorzugsweise wasserdicht ist.

3. Behälter nach Anspruch 2, bei dem im zusammengeklappten Zustand die zweite größere Wand (16) und die kleineren Wände (18, 19) in dem Kasten (1) enthalten sind und die erste größere Wand (13) einen Deckel darstellt, der den Oberteil des Kastens (1) abdeckt.

4. Behälter nach Anspruch 2 oder 3, bei dem im aufgestellten Zustand die kleineren Wände (18, 19) und die zweite größere Wand (16) an entsprechenden Seiten (7b bis d) des Kastens (1) ruhen.

5. Behälter nach einem der vorhergehenden Ansprüche, bei dem der Entfaltungsmechanismus auf die Wände (13, 16, 18, 19) wirkende Federn umfaßt.

6. Behälter nach einem der vorhergehenden Ansprüche, bei dem die Wände (13, 16, 18, 19) mit Hilfe von gefederten Scharnieren (14, 17, 21, 22) schwenkbar angebracht werden.

7. Behälter nach einem der vorhergehenden Ansprüche, bei dem die kleineren Wände (18, 19) schwenkbar an der zweiten größeren Wand (16) angebracht werden.

8. Behälter nach einem der vorhergehenden Ansprüche, der eine Zwischenwand (23) einschließt, die sich im aufgestellten Zustand auf halbem Weg zwischen den kleineren Wänden (18, 19) befindet und wesentlich senkrecht zu den größeren Wänden (13, 16) ist, und die im zusammengeklappten Zustand vorzugsweise zwischen der ersten kleineren Wand (18) und der zweiten größeren Wand (16) liegt und sich wesentlich in einer Ebene mit der zweiten kleineren Wand (19) befindet.

9. Behälter nach Anspruch 8, bei dem die Zwischenwand (23) mit der zweiten kleineren Wand (19) verbunden wird.

10. Behälter nach einem der vorhergehenden Ansprüche, bei dem im zusammengeklappten Zustand die erste größere Wand (13) durch eine lösbare Sperrklinke (36) mit der Basis (1) verbunden wird.

11. Behälter nach einem der vorhergehenden Ansprüche, bei dem der Schließmechanismus eine Übertragung umfaßt, angeordnet zum Übertragen einer Rotation von einer Rotationsantriebsquelle, z.B. einem Motor (51), nacheinander zu den kleineren Wänden (18, 19), der zweiten größeren Wand (16) und der ersten größeren Wand (13).

12. Behälter nach einem der vorhergehenden Ansprüche, bei dem der Schließmechanismus umkehrbar ist und den Entfaltungsmechanismus darstellt.

13. Fahrzeug, das einen Behälter einschließt, angebracht in einer Vertiefung (2) im Boden (3) eines Kofferraums des Fahrzeugs, **dadurch gekennzeichnet, daß** der Behälter ein aufstellbarer und zusammenklappbarer Behälter nach einem der Ansprüche 1 bis 12 ist.

## Revendications

1. Conteneur redressable et pliable comprenant dans l'état redressé une base (1), des première et deuxième parois majeures mutuellement parallèles (16, 13) s'élevant à partir de la base (1), et des première te deuxième parois mineures mutuellement parallèles (18, 19) s'élevant à partir de la base (1), les parois mineures (18, 19) s'étendant entre les parois majeures (13, 16) et étant pratiquement orthogonales à celles-ci, une partie de bordure de chaque paroi étant montée par pivotement, de sorte que dans l'état plié du conteneur, les parois (13, 16, 18, 19) sont pratiquement parallèles à la base (1), la première paroi majeure (13) étant superposée à la deuxième paroi majeure (16) et les première et deuxième parois mineures (18, 19) étant agencées entre la deuxième paroi majeure (16) et la base (1), **caractérisé en ce que** le conteneur englobe un mécanisme de déploiement pour déplacer la première paroi majeure (13), la deuxième paroi majeure (16) et les parois mineures (18, 19) de manière successive dans l'ordre indiqué, de l'état plié vers l'état redressé, et/ou un mécanisme de fermeture pour déplacer les parois mineures (18, 19), la deuxième paroi majeure (16) et la première paroi majeure (13) de manière successive dans l'ordre indiqué, de l'état redressé vers l'état plié.

2. Conteneur selon la revendication 1, dans lequel la base comprend une boîte à partie supérieure ouverte (1), l'intérieur correspondant étant de préférence non absorbant, la boîte (1) étant en général étanche à l'eau.

3. Conteneur selon la revendication 2, dans lequel, dans l'état plié, la deuxième paroi majeure (16) et les parois mineures (18, 19) sont contenues dans la boîte (1), la première paroi majeure (13) constituant un couvercle recouvrant la partie supérieure de la boîte (1).

4. Conteneur selon les revendications 2 ou 3, dans lequel, dans l'état redressé, les parois mineures (18, 19) et la deuxième paroi majeure (16) reposent contre les côtés correspondants (7b-d) de la boîte (1).

5. Conteneur selon l'une quelconque des revendications précédentes, dans lequel le mécanisme de déploiement comprend des ressorts agissant sur les parois (13, 16, 18, 19).

6. Conteneur selon l'une quelconque des revendications précédentes, dans lequel les parois (13, 16, 18, 19) sont montées par pivotement par l'intermédiaire de charnières chargées par ressort (14, 17, 21, 22).

7. Conteneur selon l'une quelconque des revendications précédentes, dans lequel les parois mineures (18, 19) sont montées par pivotement sur la deuxième paroi majeure (16).

8. Conteneur selon l'une quelconque des revendications précédentes, englobant une paroi intermédiaire (23), agencée dans l'état redressé à mi-chemin entre les parois mineures (18, 19) et pratiquement orthogonale aux parois majeures (13, 16), et agencée dans l'état plié de préférence entre la première paroi mineure (18) et la deuxième paroi majeure (16) et pratiquement co-planaire à la deuxième paroi mineure (19).

9. Conteneur selon la revendication 8, dans lequel la paroi intermédiaire (23) est reliée à la deuxième paroi mineure (19).

10. Conteneur selon l'une quelconque des revendications précédentes, dans lequel, dans l'état plié, la première paroi majeure (13) est connectée à la base (1) par un verrou à dégagement (36).

11. Conteneur selon l'une quelconque des revendications précédentes, dans lequel le mécanisme de fermeture comprend une transmission destinée à transmettre la rotation à partir d'une source d'entraînement en rotation, par exemple d'un moteur (51), de manière successive vers les parois mineures (18, 19), la deuxième paroi majeure (16) et la première paroi majeure (13).

12. Conteneur selon l'une quelconque des revendications précédentes, dans lequel le mécanisme de fermeture est réversible et constitue le mécanisme de déploiement.

13. Véhicule englobant un conteneur ajusté dans un creux (2) dans le plancher (3) d'un coffrer du véhicule, **caractérisé en ce que** le conteneur est un conteneur redressable et pliable selon l'une quelconque des revendications 1 à 12.
